## Europäisches Patentamt

## European Patent Office

## Office européen des brevets

(19)

(11) Publication number: **0 088 038**
**B1**

(12) **EUROPEAN PATENT SPECIFICATION**

(45) Date of publication of patent specification: **13.01.88**

(51) Int. Cl.⁴: **B 60 C 9/20, B 60 C 9/22**

(21) Application number: **83630025.1**

(22) Date of filing: **22.02.83**

(54) **Reinforcing belt for tires with radial casing.**

(30) Priority: **26.02.82 LU 83980**

(43) Date of publication of application:
**07.09.83 Bulletin 83/36**

(45) Publication of the grant of the patent:
**13.01.88 Bulletin 88/02**

(84) Designated Contracting States:
**DE FR GB IT**

(56) References cited:
**BE-A- 650 915**
**FR-A-1 586 370**
**FR-A-2 369 925**
**FR-A-2 417 406**
**FR-A-2 499 473**
**GB-A-2 017 019**
**GB-A-2 064 445**
**LU-A- 76 739**
**US-A-4 196 764**
**US-A-4 277 296**

(73) Proprietor: **THE GOODYEAR TIRE & RUBBER COMPANY**
**1144 East Market Street**
**Akron, Ohio 44316-0001 (US)**

(72) Inventor: **Maathuis, Antonnis Gerardus**
**1 Rue Tomm**
**L-9454 Fouhren (LU)**
Inventor: **Parsons, Anthony Williams**
**2 Rue du Canal**
**L-9118 Schieren (LU)**

(74) Representative: **Weyland, Joseph Jean Pierre**
**Goodyear Technical Center Luxembourg Patent Department Avenue Gordon Smith**
**L-7750 Colmar-Berg (LU)**

Courier Press, Leamington Spa, England.

## Description

The present invention relates to a tire with a radial carcass, a ground engaging tread, a reinforcing belt structure disposed between the carcass and the tread, the reinforcing belt structure comprising a radially outermost belt layer and a radially innermost belt layer of wires or cords having a width $L_2$ and a width $L_1$ respectively, the wires or cords of each of said crossed belt layers forming an angle of 15 to 35° with respect to the circumferential direction of the tire, whereby the belt structure comprises: a first layer of textile filaments or cords comprising two axially spaced bands disposed radially outwardly of the end portions of the innermost belt layer, the outer lateral edges of the first layer of textile filaments or cords being spaced apart a distance $L_3$ such that $L_3$ is comprised between the width of the narrowest and the width of the widest belt layer of the reinforcing belt structure. Such tires have already been described in GB—A—2 064 445. When such tires are used on passenger cars which are driven at very high speeds, the tread is subjected to great centrifugal forces and consequently the edges of the layers of the belt which are located in the shoulders of the tread tend to separate from the rubber.

The prior art proposed to solve this problem by providing one or several layers of textile cords which extend over the entire width of the belt, the cords forming a very small angle (normally 0°) with the circumferential direction.

Although the endurance at high speed of tires which incorporate textile layers has been considerably improved, it has been ascertained that, despite the presence of these layers, faults could appear in the region of the shoulders of the tire at the point where the edges of the two layers of the belt are located. In fact, the cords of the layers of the belt form a relatively large angle amongst themselves in such a way that the effect known by the name of "fretting" between adjacent layers becomes relatively important at high speed. The movement of the edges of one layer with respect to the other may result in the edges of the layers separating.

The invention aims to remedy these disadvantages of the prior art and is characterized in that the tire comprises: a second layer of textile filaments or cords having a width $L_4$ which is at least equal to the width $L_2$ of the radially outermost belt layer, disposed radially outwardly of the radially outermost belt layer, whereby the textile filaments of cords of the second layer are disposed such that they form an angle of between 0 and 10° with respect to the circumferential direction of the tire, whereby each of said bands has a width which is comprised between 10 and 30% of the width $L_4$ of the second layer of textile filaments or cords, such that $L_2 < L_3 \leqslant L_4$ if $L_1 > L_2$ or $L_1 < L_3 \leqslant L_4$ if $L_2 \geqslant L_1$ respectively.

Tires constructed according to the principles of the present invention not only have greater resistance at high speed but, due to the fact that there is greater reinforcement at the shoulders than at the center of the tread and consequently less rigidity of the belt in the central portion of the tread, better stability is obtained at high speed and greater comfort at low speeds. The invention will now be illustrated and described with the aid of the attached drawings:

Figure 1 is a view in cross section of a tire comprising a belt package according to the present invention.

Figure 2 is a partial plan view of the belt package.

Figures 3 and 4 are diagrammatic views of two particular embodiments of the belt package.

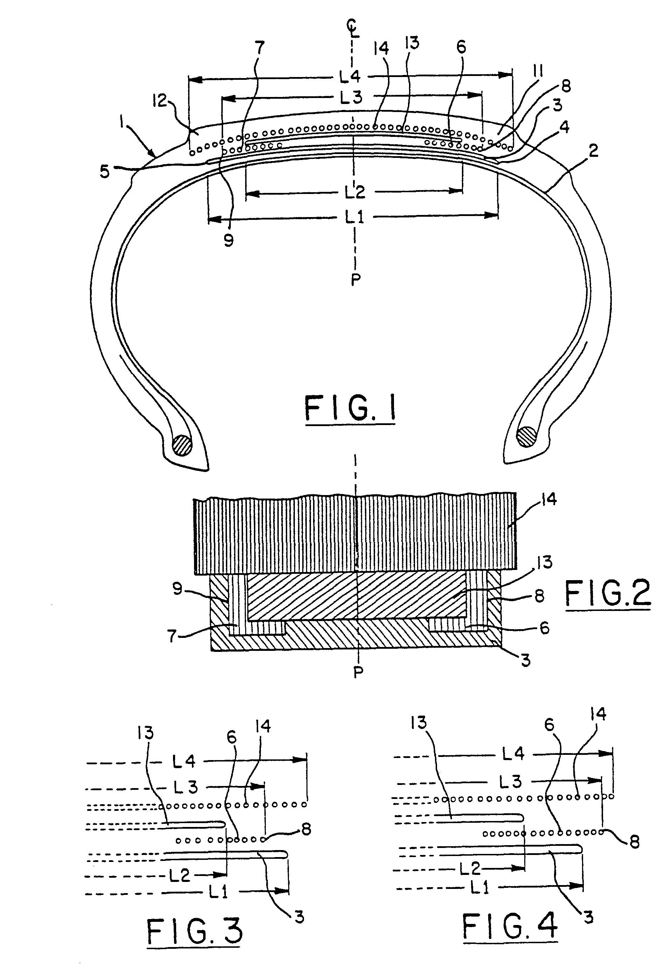

In figure 1 a tire 1 is illustrated which comprises a carcass 2 of the radial type, i.e., comprising a carcass the cords of which form an angle of from 70 to 90° with respect to the circumferential direction of the tire 1. In figure 1 the carcass 2 contains a single ply. However, the carcass of tires of the present invention can contain more than one ply. A first layer of the belt 3 which extends over the entire circumference of the tire 1 is arranged above the carcass 2 in the region of the crown of the tire. The cords of the layer 3 form an angle of between 15 and 35° with respect to the circumferential direction of the tire. The layer 3 extends over the entire width of the tread and its edges 4, 5 are arranged in the regions of the shoulders 11, 12. The layer 3 is of width $L_1$.

The belt package comprises, in addition, bands of textile cords 6, 7 which are arranged near the edges 4, 5 of the layer 3 and radially outside this layer with respect to the axis of the tire. The width of these bands is between 10 and 30% of the width $L_4$ of an overlay 14. The orientation of the textile cords of the bands is such that they form a very small angle with the circumferential direction of the tire. This angle is between 0 and 10° and is preferably 0°.

Instead of forming a fabric of cords, that is with a weft having very low resistance, the bands of textile cords 6, 7 can also form a square woven fabric composed of reinforcement cords intersecting at right angles. The warp and weft cords can be identical or composed of cords of a first material, oriented in the other direction. The cords can be inclined with respect to the circumferential direction of the tire. If the warp and weft cords are not identical, the cords with the higher resistance preferably form a very small angle with respect to the circumferential direction of the tire. This angle is between 0 and 10° and is preferably 0°.

The belt also comprises a layer 13 which extends over the entire circumference of the tire in the region of its crown. The figure illustrates the case where the width $L_2$ of this layer 13 is slightly less than the width $L_1$ of the layer 3 in order to avoid the edges of the layers being superposed in the regions of the shoulders 11, 12 of the tire. The cords which compose the layer 13 are generally oriented at an angle of between 15 and 35° with respect to the circumferential tread center line. The cords of the layer 13 are oriented such that the angle which they form with the circumferential direction is opposite to that formed by the cords of the layer 3, the cords of belt ply 3 being at an angle essentially the same as the cords of belt ply 13 to the circumferential tread center line. Finally, the belt comprises a layer 14 of textile cords which extends over the entire width of the belt, but only need to be as wide as the radially outermost belt ply 13, even when the width $L_2$ of belt ply 13 is less than the width $L_1$ of the radially innermost belt ply 3. The width $L_4$ of this layer is such that it is equal or slightly greater than the width $L_1$ of the layer 3, although, again, layer 14 can be as wide as ply 13. The orientation of the cords of the layer 14 is such that they form a very small angle with the circumferential direction. This angle is between 0 and 10° and is preferably 0°.

Figure 2, which is a partial plan view of the belt package according to the invention, shows the relative position of the layers of the belt as well as the orientation of the cords which comprise the layers.

In figures 3 and 4, two particular embodiments of the invention are illustrated.

Figure 3 illustrates a construction where $L_1 > L_3 > L_2$, i.e. the case where the outer lateral edges 8, 9 of the bands are located in the space which separates the edges of the layers 3 and 13. As a result the distance which separates the edges 8, 9 is always a value between the values of the widths $L_1$ and $L_2$ of the layers 3 and 13.

It is also suitable to place the textile bands as indicated in figure 2 which shows the case where $L_1 \leqslant L_3 \leqslant L_4$ (with $L_1 > L_2$), that is the case where the textile bands project slightly beyond the edges of the layer 3 while remaining covered over their entire width by the textile layer 14.

The belt plies are comprised of any conventional type of cords such as steel, aramid and fiberglass, but are not limited thereto.

The textile layer and textile bands which are generally used to reinforce tires are comprised of filaments or cords which have a high tensile strength, such as, but not limited to, polyamide and polyester cords.

Nylon cords are particularly suitable for use in the textile cord layer and the textile bands.

The invention has been illustrated with the aid of a tire belt with two layers, the width of the layer nearer the carcass being greater than the width of the layer nearer the tread. The present invention is not limited to this embodiment, also applying to the case where the width of the layer nearer the casing is greater or equal to the width of the layer nearer the tread.

Likewise the invention is not limited to the use of a single layer of textile cords or a single layer of textile bands, but also applies to tires which contain more than one layer of textile cords and/ or textile bands, e.g., two layers or more, for example where a textile strip is wound more than once around the tire upon itself.

## Claims

1. Tire (1) with a radial carcass (2), a ground engaging tread, a reinforcing belt structure (3, 13) disposed between the carcass and the tread, the reinforcing belt structure comprising a radially outermost belt layer (13) and a radially innermost belt layer (3) of wires or cords having a width $L_2$ and a width $L_1$ respectively, the wires or cords of each of said crossed belt layers (13, 3) forming an angle of 15 to 35° with respect to the circumferential direction (P) of the tire, whereby the belt structure comprises:

a first layer (6, 7) of textile filaments or cords comprising two axially spaced bands (6 and 7) disposed radially outwardly of the end portions of the innermost belt layer (3), the outer lateral edges of the first layer (6, 7) of textile filaments or cords being spaced apart a distance $L_3$ such that $L_3$ is comprised between the width of the narrowest and the width of the widest belt layer of the reinforcing belt structure (3, 13),

characterized in that the tire comprises:

a second layer (14) of textile filaments or cords having a width $L_4$ which is at least equal to the width $L_2$ of the radially outermost belt layer (13), disposed radially outwardly of the radially outermost belt layer (13), whereby the textile filaments of cords of the second layer (14) are disposed such that they form an angle of between 0 and 10° with respect to the circumferential direction (P) of the tire, whereby each of said bands (6, 7) has a width which is comprised between 10 and 30% of the width $L_4$ of the second layer (14) of textile filaments or cords, such that $L_2 < L_3 \leqslant L_4$ if $L_1 > L_2$ or $L_1 < L_3 \leqslant L_4$ if $L_2 \geqslant L_1$ respectively.

2. Tire according to claim 1 characterized in that each of said bands (6 and 7) of the first layer (6, 7) of textile filaments or cords has a width comprised between 15 and 25% of the width $L_4$ of the second layer (14) of textile filaments or cords.

3. Tire according to claim 1 characterized in that the filaments or cords of the second layer (14) of textile filaments or cords and of the first layer (6, 7) of textile filaments or cords consist of nylon.

4. Tire according to one of the preceding claims characterized in that the filaments or cords of the bands (6, 7) are disposed such that they form an angle comprised between 0 and 10° with respect to the circumferential direction (P) of the tire.

## Patentansprüche

1. Reifen (1) mit einer radialen Karkasse (2), mit einer den Boden berührenden Lauffläche, mit einem Verstärkungsgürtelaufbau (3, 13), der zwischen der Karkasse und der Lauffläche angeordnet ist, wobei der Verstärkungsgürtelaufbau eine radial äußere Gurtlage (13) und eineradial innere Gurtlage (3) aus Drähten oder Korden mit einer Breite $L_2$ bzw. einer $L_1$ aufweist, wobei die Drähte oder Korde jeder der gekreuzten Gurtlagen (13, 3) einen Winkel von 15 bis 35° zur Umfangsrichtung (P) des Reifens aufweisen, wobei der Gürtelaufbau eine erste Lage (6, 7) aus textilen Flächen oder Korden aus zwei in Axialrichtung beabstandeten Bändern (6 und 7) aufweist, die radial außerhalb der Endabschnitte der inneren Gurtlage (3) angeordnet sind, und wobei die Seitenränder der ersten Lage (6, 7) aus textilen Flächen oder Korden einen Abstand $L_3$ voneinander aufweisen, derart, daß $L_3$ zwischen der Breite der schamalsten und der Breite der breitesten Gurtlage des Verstärkungsgürtelaufbaus (3, 13) liegt, dadurch gekennzeichnet, daß der Reifen eine zweite Lage (14) aus textilen Fasern oder Korden mit einer Breite $L_4$ aufweist, welche wenigstens gleich ist der Breite $L_2$ der radial äußeren Gurtlage (13), und welche radial außerhalb der radial äußeren Gurtlage (13) angeordnet ist, daß die textilen Flächen oder Korde der zweiten Lage (14) derart angeordnet sind, daß sie einen Winkel zwischens 0° und 10° gegenüber der Umfangsrichtung (P) des Reifens bilden, und daß jedes Bands (6, 7) eine Breite aufweist, welche zwischen 10% und 30% der Breite $L_4$ der zweiten Lage (14) aus textilen Flächen oder Korden liegt, derart, daß $L_2 < L_3 \leqslant L_4$ liegt, wenn $L_1 > L_2$ ist, oder daß $L_1 < L_3 \leqslant L_4$ liegt, falls $L_2 \geqslant L_1$ ist.

2. Reifen nach Anspruch 1, dadurch gekennzeichnet, daß jedes Band (6 und 7) der ersten Lage (6, 7) aus textilen Flächen oder Korden eine Breite zwischen 15% und 25% der Breite $L_4$ der zweiten Lage (14) aus textilen Flächen oder Korden aufweist.

3. Reifen nach Anspruch 1, dadurch gekennzeichnet, daß die Flächen oder Korde der zweiten Lage (14) aus textilen Flächen oder Korden und der ersten Lage (6, 7) aus textilen Flächen oder Korden aus Nylon bestehen.

4. Reifen nach einem der vorherigen Ansprüche, dadurch gekennzeichnet, daß die Flächen oder Korde der Bänder (6, 7) derart angeordnet sind, daß sie einen Winkel zwischen 0° und 10° gegenüber der Umfangsrichtung (P) des Reifens bilden.

## Revendications

1. Bandage pneumatique (1) comportant une carcasse radiale (2), une bande de roulement venant s'engager sur le sol, ainsi qu'une structure de ceinture de renforcement (3, 13) disposée entre la carcasse et la bande de roulement, cette structure comprenant une couche de ceinture extérieure radiale (13) et une couche de ceinture intérieure radiale (3) constituées toutes deux de fils ou de câblés ayant une largeur $L_2$ et une largeur $L_1$ respectivement, les fils ou les câblés de chacune de ces couches de ceinture croisées (13, 3) formant un angle de 15 à 35° par rapport à la direction circonferentielle (P) du bandage pneumatique, cette structure de ceinture comprenant une première couche (6, 7) de câblés ou de filaments textiles constituant deux bandes espacées axialement (6 et 7) qui sont disposées radialement vers l'extérieur des extrémités de la couche de ceinture intérieure (3), les bords latéraux extérieurs de la première couche (6, 7) de câblés ou de filaments textiles étant espacés l'un de l'autre d'une distance $L_3$, de telle sorte que $L_3$ soit compris entre la largeur de la couche de ceinture la plus étroite et la largeur de la couche de ceinture la plus large de la structure de renforcement (3, 13), ce bandage pneumatique étant caractérisé en ce qu'il comprend une seconde couche (14) de câblés ou de filaments textiles ayant une largeur $L_4$ qui est au moins égale à la largeur $L_2$ de la couche de ceinture extérieure radiale (13), cette seconde couche étant disposées radialement vers l'extérieur de la couche de ceinture extérieure radiale (13), les câblés ou les filaments textiles de la seconde couche (14) étant ainsi disposés de telle manière qu'ils forment un angle compris entre 0 et 10° par rapport à la direction circonférentielle (P) du bandage pneumatique, tandis que chacune des bandes (6, 7) a une largeur comprise entre 10% et 30% de la largeur $L_4$ de la seconde couche (14) de câblés ou de filaments textiles, d'où $L_2 \leqslant L_4$ si $L_1 > L_2$ ou $L_1 < L_3 \leqslant L_4$ si $L_2 \geqslant L_1$ respectivement.

2. Bandage pneumatique selon la revendication 1, caractérisé en ce que chacune des bandes (6 et 7) de la première couche (6, 7) de câblés ou de filaments textiles a une largeur comprise entre 15 et 25% de la largeur $L_4$ de la seconde couche (14) de câblés ou de filaments textiles.

3. Bandage pneumatique selon la revendication 1, caractérisé en ce que les câblés ou les filaments textiles de la seconde couche (14) et les câblés ou les filaments textiles de la première couche (6, 7) sont constitués de nylon.

4. Bandage pneumatique selon l'une quelconque des revendications précédentes, caractérisé en ce que les filaments ou les câblés des bandes (6, 7) sont disposés de telle sorte qu'ils forment un angle compris entre 0 et 10° par rapport à la direction circonférentielle (P) du bandage pneumatique.

0 088 038

FIG.1

FIG.2

FIG.3

FIG.4

1